# EUROPEAN PATENT SPECIFICATION

(11) **EP 4 568 303 B1**
(45) Date of publication and mention of the grant of the patent: **22.04.2026**
(21) Application number: 23860634.7
(22) Date of filing: 29.06.2023
(51) Int. Cl.: H04W 4/06, H04W 4/80, H04W 8/00, H04W 12/03, H04W 12/043, H04W 12/63, H04W 56/00, H04W 12/126, H04W 12/50, H04W 4/029

(54) **ELECTRONIC DEVICE FOR ADVERTISING FOR LOST ITEM, AND OPERATING METHOD THEREFOR**
ELEKTRONISCHE VORRICHTUNG ZUR ANKÜNDINGUNG FÜR VERLORENE ARTIKEL UND BETRIEBSVERFAHREN DAFÜR
DISPOSITIF ÉLECTRONIQUE D'ANNONCE POUR UN OBJET PERDU ET SON PROCÉDÉ DE FONCTIONNEMENT

(30) Priority: 02.09.2022 KR 20220111561; 07.10.2022 KR 20220128300
(43) Date of publication of application: 11.06.2025
(73) Proprietor: Samsung Electronics Co., Ltd., Suwon-si, Gyeonggi-do 16677 (KR)
(72) Inventor: LEE, Lyesuk, Suwon-si Gyeonggi-do 16677 (KR)
(74) Representative: Gulde & Partner
(86) International application number: PCT/KR2023/009165
(87) International publication number: WO 2024/048951

(56) References cited:
- EP-A1- 4 167 603
- WO-A1-2022/031121
- KR-A- 20170 083 431
- KR-A- 20210 092 079
- KR-A- 20220 018 869
- KR-A- 20220 109 002
- US-A1- 2018 048 704
- US-A1- 2020 107 164
- ALEXANDER HEINRICH ET AL: "Who Can Find My Devices? Security and Privacy of Apple's Crowd-Sourced Bluetooth Location Tracking System", ARXIV.ORG, CORNELL UNIVERSITY LIBRARY, 201 OLIN LIBRARY CORNELL UNIVERSITY ITHACA, NY 14853, 3 March 2021 (2021-03-03), XP081904657

## Description

### [Technical Field]

Various embodiments of the disclosure relate to an electronic device for performing lost advertising and a method of operating the same.

As the popularity of smart electronic devices such as smartphones and tablets increases, the use of various peripheral devices (e.g., slave devices or secondary devices) used with these smart electronic devices is increasing. Accordingly, the market for peripheral devices such as trackers, digital pens, or earbuds is also boosted significantly.

Because a peripheral device is generally small in size, it may be lost frequently. When the peripheral device is paired (or connected) with a central device (e.g., a parent device or a smart electronic device), the smart electronic device may track the location of the peripheral device or the peripheral device may output a notification (e.g., an alarm sound). When the peripheral device is disconnected from the smart electronic device or a network, the peripheral device may broadcast an advertising packet, and a nearby external electronic device (e.g., a helper device) supporting offline finding may discover the peripheral device and report location information related to the peripheral device to a server. In the context of lost device finding, document WO 2022/031121 A1 discloses special off-line states including device rebooting as well as lost device advertisements.

### [Detailed Description of the Invention]

### [Technical Solution]

The invention is set out in the appended set of claims. The present invention may address at least one of the above mentioned technical problems. In particular, the present invention may address the problem that a peripheral device is disconnected from a smart electronic device or a network. An electronic device according to an embodiment may include communication circuitry and at least one processor. The at least one processor may be configured to identify that the electronic device is rebooted a specified time after a connection to a first external electronic device is released. The at least one processor may be configured to generate an advertising packet including a first time stamp of a specified value based on the rebooting. The at least one processor may be configured to broadcast the advertising packet through the communication circuitry. The at least one processor may be configured to receive a message including a second time stamp of a server from a second external electronic device through the communication circuitry, after broadcasting the advertising packet. The at least one processor may be configured to set a tick count of the electronic device based on the second time stamp of the server.

A server according to an embodiment may include communication circuitry and at least one processor. The at least one processor is configured to receive a location report from a first external electronic device through the communication circuitry. The at least one processor is configured to identify an electronic device performing lost advertising from the location report. The at least one processor is configured to determine whether the location report includes a first time stamp of a specified value. The at least one processor is configured to, when the location report includes the first time stamp of the specified value, transmit a message including a second time stamp of the server to the electronic device through the first external electronic device.

A method of operating an electronic device according to an embodiment may include identifying that the electronic device is rebooted a specified time after a connection to a first external electronic device. The method may include generating an advertising packet including a first time stamp of a specified value based on the rebooting. The method may include broadcasting the advertising packet. The method may include receiving a message including a second time stamp of a server from a second external electronic device, after broadcasting the advertising packet. The method may include setting a tick count of the electronic device based on the second time stamp of the server.

A method of operating a server according to an embodiment may include receiving a location report from a first external electronic device. The method may include identifying an electronic device performing lost advertising from the location report. The method may include determining whether the location report includes a first time stamp of a specified value. The method may include, when the location report includes the first time stamp of the specified value, transmitting a message including a second time stamp of the server to the electronic device through the first external electronic device.

In a non-transitory computer-readable storage medium storing at least one program according to an embodiment, the at least one program may include instructions which when executed by at least one processor of an electronic device, enable the electronic device to identify that the electronic device is rebooted a specified time after a connection to a first external electronic device, generate an advertising packet including a first time stamp of a specified value based on the rebooting, broadcast the advertising packet, receive a message including a second time stamp of a server from a second external electronic device, after broadcasting the advertising packet, and set a tick count of the electronic device based on the second time stamp of the server.

In a non-transitory computer-readable storage medium storing at least one program according to an embodiment, the at least one program may include instructions which when executed by at least one processor of a server, enable the server to receive a location report from an external electronic device, identify an electronic device performing lost advertising from the location report, determine whether the location report includes a first time stamp of a specified value, and when the location report includes the first time stamp of the specified value, transmit a message including a second time stamp of the server to the electronic device through the external electronic device. According to the present invention, when a peripheral device is disconnected from a smart electronic device or a network, the peripheral device may broadcast an advertising packet, and a nearby external electronic device (e.g., a helper device) supporting offline finding may discover the peripheral device and report location information related to the peripheral device to a server. Thus, an improved solution to the situation that a peripheral device is disconnected from a smart electronic device or a network, may be provided.

### [Brief Description of Drawings]

FIG. 1 is a block diagram illustrating an electronic device in a network environment according to various embodiments.
FIG. 2 is a diagram illustrating an offline finding network according to an embodiment.
FIG. 3A is a diagram illustrating the configuration of an electronic device performing lost advertising according to an embodiment.
FIG. 3B is a diagram illustrating the configuration of a server supporting an offline finding network according to an embodiment.
FIG. 4 is a diagram illustrating location corruption in an offline finding network according to an embodiment.
FIG. 5 is a diagram illustrating the format of an advertising packet according to an embodiment.
FIG. 6 is a sequence diagram illustrating a signal flow for a procedure of performing lost advertising according to an embodiment.
FIG. 7 is a flowchart illustrating lost advertising in an electronic device according to an embodiment.
FIG. 8 is a flowchart illustrating offline finding in a server according to an embodiment.
FIG. 9 illustrates an exemplary system architecture for an offline finding network according to an embodiment.
FIG. 10 is a sequence diagram illustrating a signal flow for an offline finding setting according to an embodiment.
FIG. 11 is a sequence diagram illustrating a signal flow for location reporting in an offline situation according to an embodiment.
FIG. 12 is a sequence diagram illustrating a signal flow for lost advertising after rebooting according to an embodiment.
FIG. 13 is a sequence diagram illustrating a signal flow for clock synchronization for lost advertising according to an embodiment.

### [Mode for Carrying out the Invention]

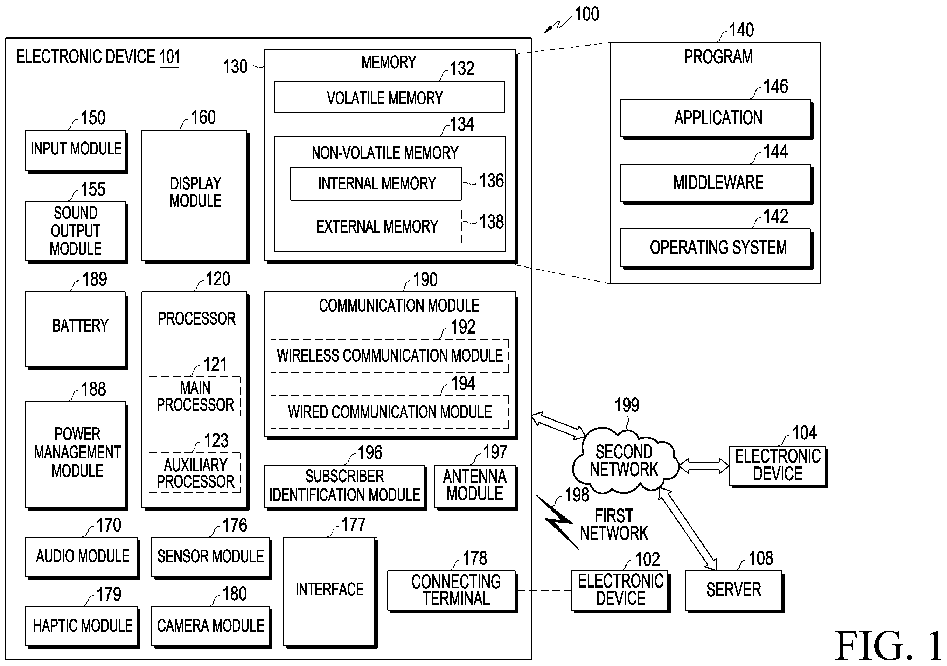

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, (e.g., by the electronic device 101 where the artificial intelligence is performed or via a separate server (e.g., the server 108). Learning algorithms may include, but are not limited to, (e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196. The wireless communication module 192 may support a 5G network, after a 4G network, and next-generation communication technology, (e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, (e.g., a high data transmission rate.

The wireless communication module 192 may support various technologies for securing performance on a high-frequency band, such as, (e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a specified high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the specified high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, (e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

In an embodiment, the electronic device 101 may be used together with an electronic device (e.g., a peripheral device) such as a location tracker, a digital pen, or earbuds. An offline finding network, which is a technology for tracking the location of a peripheral device that does not support network communication with the help of a nearby external electronic device, may be implemented, for example, by Bluetooth low energy (BLE).

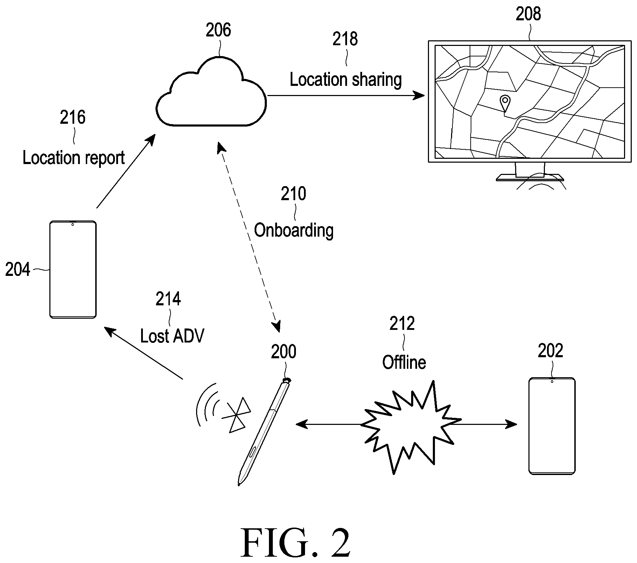

FIG. 2 is a diagram illustrating an offline finding network according to an embodiment.

Referring to FIG. 2, when an electronic device 200 is connected to an external electronic device 202 (e.g., a mother device or a central device) (e.g., the electronic device 101), it may be onboarded through the central device 202 in operation 210. In an embodiment, the onboarding may include registering the electronic device 200 to a server 206 and/or synchronizing the electronic device 200 with the server 206.

In operation 212, the electronic device 200 may detect an offline state in which it is disconnected from a network or the central device 202 (e.g., the electronic device 101). In an embodiment, when a user loses the electronic device 200, an increasing distance between the electronic device 200 and the central device 202 may lead to the disconnection of the electronic device 200 from the central device 202. The electronic device 200 may operate in a lost mode in response to the detection of the offline state.

In operation 214, the electronic device 200 (e.g., the lost device) in the lost mode may broadcast an advertising packet (e.g., a BLE advertising packet) including its own identification information (e.g., an ID) (e.g., Lost ADV). For example, the advertising packet may be a lost advertising packet Lost_ADV having a specified format indicating that the electronic device 200 is in the lost mode. An external electronic device 204 (e.g., a helper device) located in the vicinity of the electronic device 200 may perform BLE scanning to support offline finding according to user settings (or a system configuration) and receive the lost advertising packet through the BLE scanning.

In operation 216, the external electronic device 204 may receive the advertising packet, and based on identifying that the advertising packet is the lost advertising packet Lost_ADV having the specified format, report its location to the server 206 along with the ID of the electronic device 200. The server 206 may identify the electronic device 200 corresponding to the ID and update a current location of the electronic device 200 based on the reported location. In an embodiment, the server 206 may recognize that the electronic device 200 is in the vicinity of the external electronic device 204.

In operation 218, the server 206 may share the updated location of the electronic device 200 with an external electronic device 208 (e.g., a personal computer (PC) or the central device 202) logged in to a user account in response to a request from the user (e.g., the owner of the electronic device 200). The user may use the user account to query the current location of the electronic device 200 and receive location information about the electronic device 200 from the server 206.

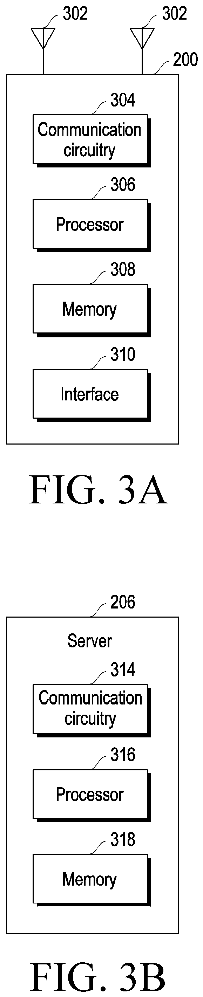

FIG. 3A is a diagram illustrating the configuration of the electronic device 200 performing lost advertising according to an embodiment.

Referring to FIG. 3A, the electronic device 200 (e.g., a peripheral device such as a location tracker, a digital pen, or earbuds) may be configured to be paired with the central device 202 (e.g., the electronic device 101 of FIG. 1) to implement a specified function (e.g., location tracking, handwriting input, or sound output). The electronic device 200 may include one or more antennas 302, a communication circuit 304, a processor 306, memory 308, and/or an interface 310.

In an embodiment, the electronic device 200 may be configured to communicate with the electronic device 101 through the communication circuit 304 using a low-power communication protocol, such as BLE, Zigbee, or Z-Wave, for example. The electronic device 200 may include the communication circuit 304 that transmits and receives signals using the one or more antennas 302 to and from the electronic device 101 or a neighboring external electronic device (not shown) supporting the low-power communication protocol such as BLE. In an embodiment, the one or more antennas 302 may be implemented as a portion of the antenna module 198 of FIG. 1.

According to an embodiment, the communication circuit 304 may include at least one communication circuit, and the at least one communication circuit may be configured to transmit or receive signals based on the low-power communication protocol, such as BLE, Zigbee, or Z-Wave. In an embodiment, the electronic device 200 may include the communication circuit 304 supporting at least two of one or more communication protocols, without including separate communication circuits based on the one or more respective communication protocols.

The electronic device 200 may include the interface 310 (e.g., the interface 177 of FIG. 1) providing a wired and/or wireless interface for communicating with components outside the network. In an embodiment, at least a portion of the one or more the antennas 302, the communication circuit 304, or the interface 310 may be implemented as at least a portion of the communication module 190 and the antenna module 198 of FIG. 1.

The electronic device 200 may include the processor 306 (e.g., the processor 120 of FIG. 1) that may be implemented as one or more single-core processors or one or more multi-core processors, and the memory 308 (e.g., the memory 130 of FIG. 1) that stores instructions for operations of the processor 306.

According to an embodiment, the memory 308 may store data (e.g., key information) for providing operations related to lost advertising. According to an embodiment, the electronic device 200 may further include a user interface (not shown) providing information related to a unique function of the electronic device 200 and execution of lost advertising under the control of the processor 306.

FIG. 3B is a diagram illustrating the configuration of the server 206 supporting an offline finding network according to an embodiment.

Referring to FIG. 3B, the server 206 may be configured to communicate with an external electronic device (e.g., the central device 202, the external electronic device 204, and/or the external electronic device 208) through a communication circuit 314 supporting network communication (e.g., the Internet).

The server 206 may include a processor 316, which may be implemented as one or more single-core processors or one or more multi-core processors, and memory 318 that stores instructions and data for operations of the processor 316.

In an embodiment, the memory 318 may store data (e.g., key information, a time stamp, and/or a location for the electronic device 200) for providing operations related to lost advertising. According to an embodiment, the server 206 may further include a user interface (not shown) providing information related to execution of lost advertising under the control of the processor 316.

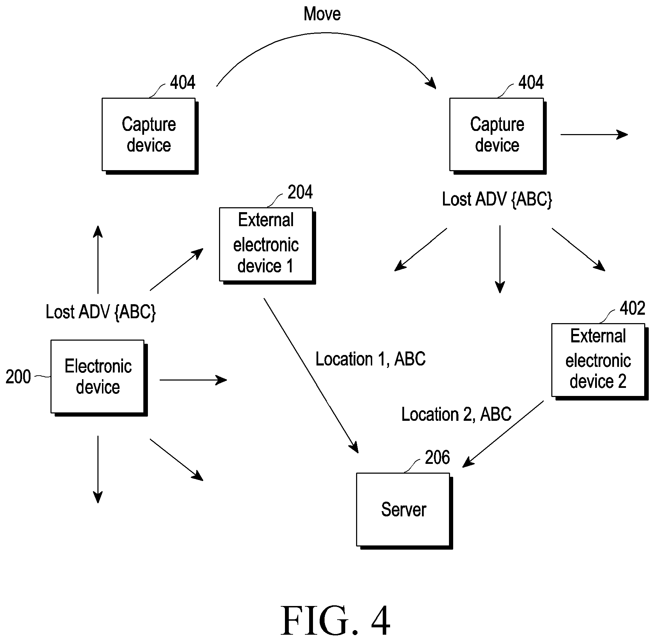

FIG. 4 is a diagram illustrating location corruption of an offline finding network according to an embodiment.

Referring to FIG. 4, a lost device (e.g., the electronic device 200) may broadcast a lost advertising packet (e.g., lost_ ADV) {ABC} having a specified format at every specified advertising interval in a lost mode. The lost advertising packet may include an ID (e.g., ID=ABC) identifying the electronic device 200. In view of the nature of BLE, the lost advertising packet may be scanned by anyone. Accordingly, an external electronic device (e.g., external electronic device 1 204) located in the vicinity of the electronic device 200 may capture the lost advertising packet, and an external electronic device (e.g., a capture device 404) including a capture tool for advertising packets may also capture the lost advertising packet.

After moving from a current location (e.g., location 1) to another location (e.g., location 2), the capture device 404 may perform a relay attack by rebroadcasting the lost advertising packet Lost_ADV{ABC}. An external electronic device (e.g., external electronic device 2 402) located in the vicinity of the capture device 404 after the movement may receive the lost advertising packet and, based on the reception of the lost advertising packet, report its location (e.g., location 2) together with the ID (e.g., ID=ABC) included in the lost advertising packet to the server 206.

The server 206 may receive a first location report including location 1 and ID=ABC from external electronic device 1 204, and also receive a second location report including location 2 and ID=ABC from external electronic device 2 402. Since the server 206 may not determine which of location 1 and location 2 is valid, finding the location of the electronic device having ID=ABC may fail.

To prevent the relay attack, the electronic device 200 may include a time stamp in the lost advertising packet. The time stamp may be generated based on a count value (e.g., a tick count) synchronized with the time of the server 206 in the electronic device 200. In an embodiment, the time stamp may include the sum of a specified reference time and a current value of the tick count. External electronic device 1 204 and external electronic device 2 402 may report their locations (e.g., location 1 and location 2) to the server 206, along with the ID and time stamp (e.g., time stamp 1) included in the lost advertising packet.

The server 206 may determine whether the first location report is valid based on time stamp 1 included in the first location report received from external electronic device 1 204, and when determining that it is valid, determine location 1 as the current location of the electronic device 200. In an embodiment, when the server 206 receives the second location report including time stamp 1 and location 2 from the external electronic device 2 402, the server 206 may compare time stamp 1 with the time of the server 206 to determine whether it has a value within a valid range. When time stamp 1 has an error exceeding a specified range from the time of the server 206, the server 206 may determine that location 2 reported with time stamp 1 is invalid and discard or drop the second location report.

While the electronic device 200 changes the time stamp periodically (e.g., in seconds or milliseconds) based on a clock synchronized with the server 206, the capture device 404 may not change the time stamp of the captured lost advertising packet. In order to prevent the time stamp included in the lost advertising packet from being manipulated by any external electronic device (e.g., the capture device 404), the electronic device 200 may include a signature in the lost advertising packet to prevent forgery and/or tampering of the lost advertising packet.

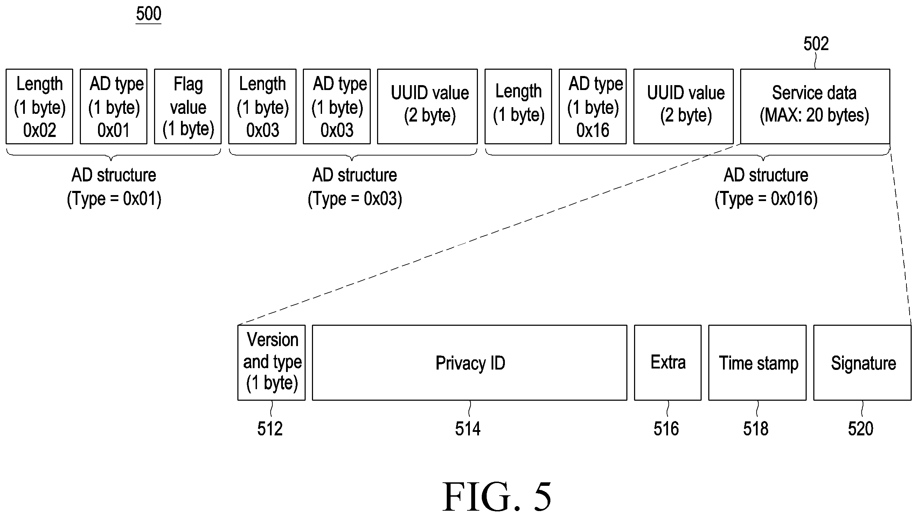

FIG. 5 is a diagram illustrating the format of an advertising packet according to an embodiment.

Referring to FIG. 5, an advertising packet 500 (e.g., a lost advertising packet) may include at least one of AD structure 1, AD structure 2, or AD structure 3 depending on an advertising type (e.g., AD_Type). Although not shown, the advertising packet 500 may be attached with a media access control (MAC) address of an advertiser (e.g., the electronic device 200).

AD structure 1 may include, for example, a 1-byte length field, a 1-byte AD_Type field (e.g., AD_Type=0x01), and a 1-byte flag field. AD structure 2 may include, for example, a 1-byte length field, a 1-byte AD_Type field (e.g., AD_Type=0x03), and a 2-byte universally unique identifier (UUID) value. AD structure 3 may include, for example, a 1-byte length field, a 1-byte AD_Type field (e.g., AD_Type=0x016), a 2-byte UUID value, and service data 502 of up to 20 bytes.

The service data 502 may include a 1-byte version and type field 512, a privacy ID 514, extra data 516, a time stamp field 518, and a signature field 520. In an embodiment, the electronic device 200 may include a time stamp generated based on a clock synchronized with the server 206 in the time stamp field 518, and include signature data calculated for the entire service data 502 including the time stamp field 518 in the signature field 520. The server 206 may authenticate the validity of the lost advertising packet 500 based on the signature data, and when the authentication fails, discard or drop the lost advertising packet 500.

In an embodiment, when the electronic device 200 is a small device (e.g., earbuds, a digital pen, or a location tracker), the electronic device 200 may not support network communication (e.g., Internet communication). The electronic device 200 may obtain a time stamp (e.g., a reference time stamp synchronized with the server 206) of the central device 202, while performing an onboarding procedure (e.g., synchronization with the server 206) through the central device 202 (e.g., the electronic device 101), and perform a clock simulation synchronized with the server 206 based on the reference time stamp. In an embodiment, the clock simulation may include an operation of increasing a tick count starting from the reference time stamp, for example, in seconds or milliseconds, and the tick count may be used as a value synchronized with the server 206 for lost advertising.

When the battery of the electronic device 200 (e.g., a location tracker) is removed and reinserted, or when the electronic device 200 (e.g., an earbud) is discharged and recharged, the electronic device 200 may lose a clock (e.g., a tick count) synchronized with the server 206. In an embodiment, the electronic device 200 may stop broadcasting the lost advertising packet so as not to perform advertising in a state vulnerable to a relay attack, when the clock is lost, thereby making offline finding of the electronic device 200 impossible.

In the embodiments described below, when a clock (e.g., a count value synchronized with the server 206) required for lost advertising is lost, the electronic device 200 may perform clock synchronization through the offline finding network to make lost advertising valid.

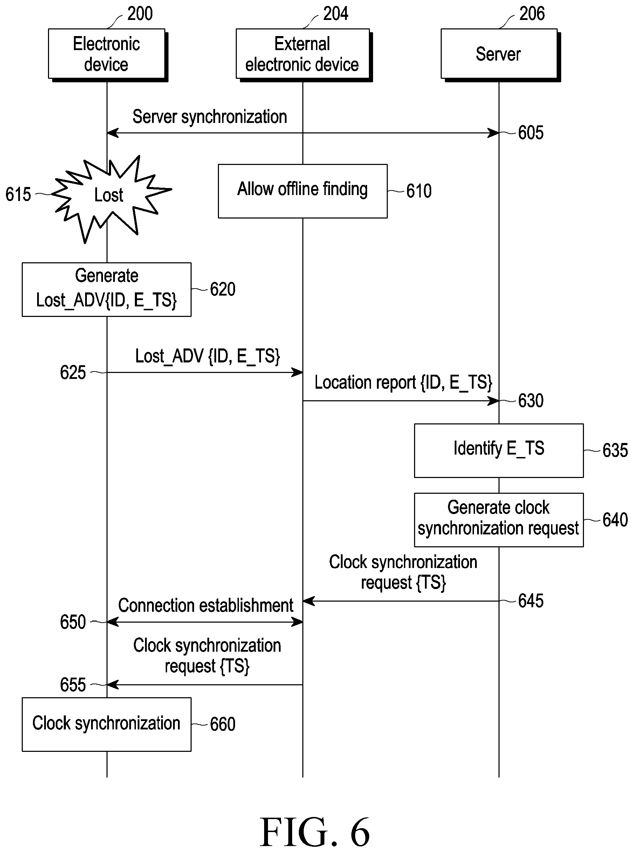

FIG. 6 is a sequence diagram illustrating a signal flow for a procedure of performing lost advertising according to an embodiment. According to embodiments, at least one of the operations described below may be omitted, modified, or changed in order.

Referring to FIG. 6, in operation 605, the electronic device 200 may be onboarded through the central device 202 (the (e.g., electronic device 101) (not shown), obtain a time stamp (e.g., a reference time stamp) synchronized with the server 206 from the central device 202, and perform a clock simulation based on the reference time stamp to synchronize with the server 206. In an embodiment, the electronic device 200 may share key information (e.g., a secret key and/or an initial vector) for secure communication with the server 206 through the onboarding procedure.

In operation 610, the external electronic device 204 (e.g., a helper device) located in the vicinity of the electronic device 200 (e.g., within a range in which a Bluetooth signal is receivable from the electronic device 200) may allow offline finding according to user settings and perform periodic BLE scanning to receive an advertising packet in the vicinity.

In operation 615, the electronic device 200 may detect that a connection (e.g., Bluetooth connection) to the central device 202 has been lost and enter the lost mode. In an embodiment, the electronic device 200 may determine to operate in the lost mode a specified time after the connection to the central device 202 is lost. In an embodiment, when the connection to the central device 202 is lost, the electronic device 200 may determine to operate in the lost mode after outputting a specified notification (e.g., a warning sound). In an embodiment, the electronic device 200 may recognize that it has entered the lost mode in a state where a clock has been lost (e.g., a rebooted state).

In operation 620, the electronic device 200 may generate a lost advertising packet Lost_ADV (e.g., the lost advertising packet 500) including the ID (e.g., the privacy ID 514) of the electronic device 200 and a time stamp of a specified value. In an embodiment, the electronic device 200 may include the specified value (e.g., an empty time stamp E_TS) in the time stamp field 518 of the lost advertising packet 500, based on identifying that a simulated clock and/or a clock synchronized with the server 206 has been lost based on a reference time stamp received from the central device 202 in the lost mode.

In an embodiment, the electronic device 200 may include the specified value (e.g., the empty time stamp E_TS) in the time stamp field 518 of the lost advertising packet 500 based on identifying that the electronic device 200 has been rebooted after the onboarding or synchronization with the server 206 through the central device 202. The specified value may be pre-agreed with the server 206 to indicate that the electronic device 200 has lost its clock and/or that clock synchronization of the electronic device 200 is required. For example, the specified value may include all 0 bits or all 1 bits.

In an embodiment, the electronic device 200 may include an encrypted privacy ID 514 in the lost advertising packet 500, so that it may be interpreted by the server 206. In an embodiment, the privacy ID 514 may be generated based on the key information shared between the electronic device 200 and the server 206. In an embodiment, the privacy ID 514 may be changed at every specified time interval according to a rule known to the electronic device 200 and the server 206.

In operation 625, the electronic device 200 may broadcast the lost advertising packet 500 including the ID (e.g., the privacy ID 514) and the time stamp 518 of the specified value (e.g., E_TS). In an embodiment, the electronic device 200 may broadcast the lost advertising packet 500 at a specified advertising interval based on an autonomously generated tick count. The external electronic device 204 may receive the lost advertising packet 500 through BLE scanning.

In operation 630, the external electronic device 204 may transmit, to the server 206, a location report including the location (e.g., a cell ID or latitude/longitude) of the external electronic device 204 together with the service data 502 included in the lost advertising packet 500, based on receiving the lost advertising packet 500. In an embodiment, the location report may include at least the ID (e.g., the privacy ID 514) of the electronic device 200, the time stamp 518 of the specified value (e.g., E_TS), and the location.

In operation 635, the server 206 may receive the location report, obtain the service data 502 of the lost advertising packet 500 included in the location report, and identify that the time stamp 518 of the service data 502 is set to the specified value (e.g., E_TS). In operation 640, the server 206 may generate a clock synchronization request including a time stamp synchronized with a clock of the server 206, based on the service data 502 including the time stamp 518 of the specified value.

In operation 645, the server 206 may transmit a remote operation message including the clock synchronization request to the external electronic device 204. In an embodiment, the server 206 may include an encrypted clock synchronization request message in the remote operation message and transmit the remote operation message to the external electronic device 204. In an embodiment, the clock synchronization request message may be encrypted with the key information shared between the server 206 and the electronic device 200 and included in the remote operation message. In an embodiment, the remote operation message may include the privacy ID 514 obtained from the lost advertising packet 500. In an embodiment, encrypting the clock synchronization request message may include inserting signature data generated based on the key information in the clock synchronization request message.

In operation 650, the external electronic device 204 may establish a connection (e.g., a BLE connection) with the electronic device 200 to transmit the clock synchronization request. In an embodiment, the BLE connection may include a general attribute profile (GATT) connection. In an embodiment, the electronic device 200 may accept the BLE connection from the external electronic device 204. In an embodiment, the electronic device 200 may accept a BLE connection from any external electronic device (e.g., the external electronic device 204), while in the lost mode (e.g., while performing the lost advertising or broadcasting the lost advertising packet 500 including the time stamp 518 of the specified value E_TS).

In operation 655, the electronic device 200 may receive the clock synchronization request from the external electronic device 204 via the BLE connection. The electronic device 200 may obtain the time stamp of the server 206 from the clock synchronization request by decrypting the clock synchronization request using the already known key information (e.g., the key information obtained in operation 605). In an embodiment, the electronic device 200 may release the BLE connection after receiving the clock synchronization request. In an embodiment, when the electronic device 200 may not decrypt the clock synchronization request with the already known key information, it may release the BLE connection.

In operation 660, the electronic device 200 may synchronize with the server 206 by starting to increase the tick count based on the time stamp of the server 206, and perform lost advertising based on the synchronized time stamp. In an embodiment, the electronic device 200 may perform clock synchronization based on the time stamp of the server 206 obtained through the external electronic device 204. In an embodiment, the clock synchronization performed by the electronic device 200 may include setting the tick count through clock simulation. In an embodiment, the clock synchronization may include setting the tick count to an initial value based on the time stamp of the server 206 and increasing the tick count every specified time unit. The tick count may mean a simulated clock.

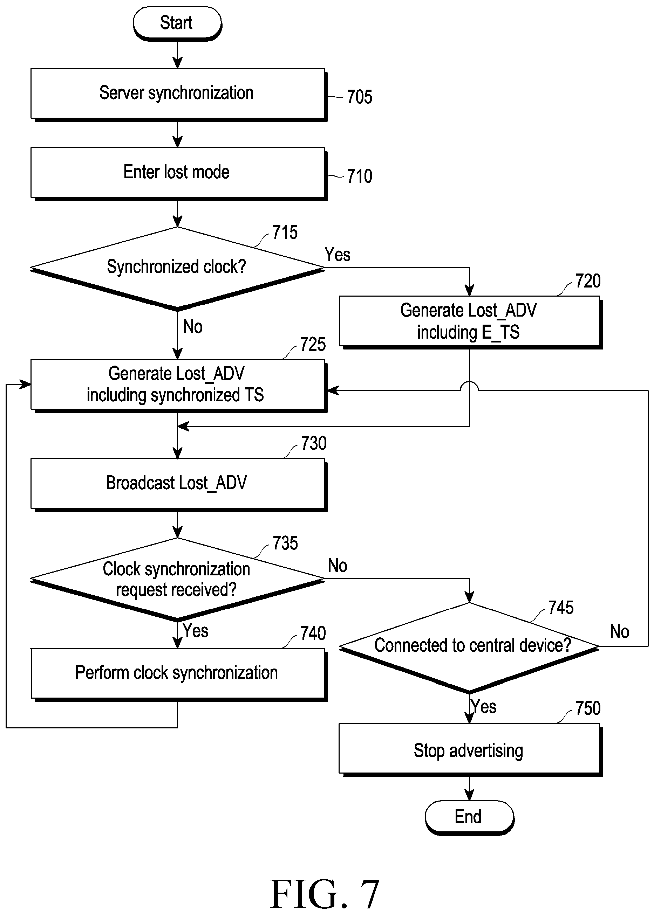

FIG. 7 is a flowchart illustrating lost advertising in an electronic device according to an embodiment. In an embodiment, the operations described below may be performed by the processor 306 of the electronic device 200. According to embodiments, at least one of the operations described below may be omitted, modified, or changed in order.

Referring to FIG. 7, in operation 705, the electronic device 200 (e.g., the processor 306) may be onboarded through the central device 202 (e.g., the electronic device 101) (not shown). The electronic device 200 (e.g., the processor 306) may obtain a time stamp (e.g., a reference time stamp synchronized with the server 206) from the central device 202 or the server 206 during the onboarding procedure, and perform clock simulation based on the reference time stamp to synchronize with the server 206. In an embodiment, the electronic device 200 may share key information (e.g., a secret key and/or an initial vector) for secure communication with the server 206 through the onboarding procedure.

In operation 710, the electronic device 200 (e.g., the processor 306) may detect that a connection (e.g., a Bluetooth connection) to the central device 202 has been lost and enter the lost mode. In an embodiment, when a specified time elapses after the connection to the central device 202 is lost, the electronic device 200 (e.g., the processor 306) may determine to operate in the lost mode.

In operation 715, the electronic device 200 (e.g., the processor 306) may determine whether a synchronized clock (e.g., a tick count) exists. In an embodiment, when the electronic device 200 is rebooted after synchronization with the server in operation 705, the electronic device 200 (e.g., the processor 306) may determine that the synchronized clock does not exist (e.g., the electronic device 200 is not synchronized with the server 206). When the synchronized clock does not exist (e.g., the electronic device 200 is not synchronized with the server 206), the electronic device 200 (e.g., the processor 306) may proceed to operation 725. On the contrary, when the electronic device 200 has the synchronized clock (e.g., the electronic device 200 is synchronized with the server 206), the electronic device 200 (e.g., the processor 306) may proceed to operation 720.

In operation 720, the electronic device 200 (e.g., the processor 306) may generate a lost advertising packet Lost_ADV (e.g., the lost advertising packet 500) including the ID (e.g., the privacy ID 514) of the electronic device 200 and the time stamp 518 of a specified value (e.g., the empty time stamp E_TS). In an embodiment, the lost advertising packet 500 may include the privacy ID 514, the time stamp 518, and the signature data 520 in the service data 502. In an embodiment, the privacy ID 514 may be generated based on the key information shared between the electronic device 200 and the server 206. In an embodiment, the signature data 520 may include information for verifying forgery and/or modification of the service data 520.

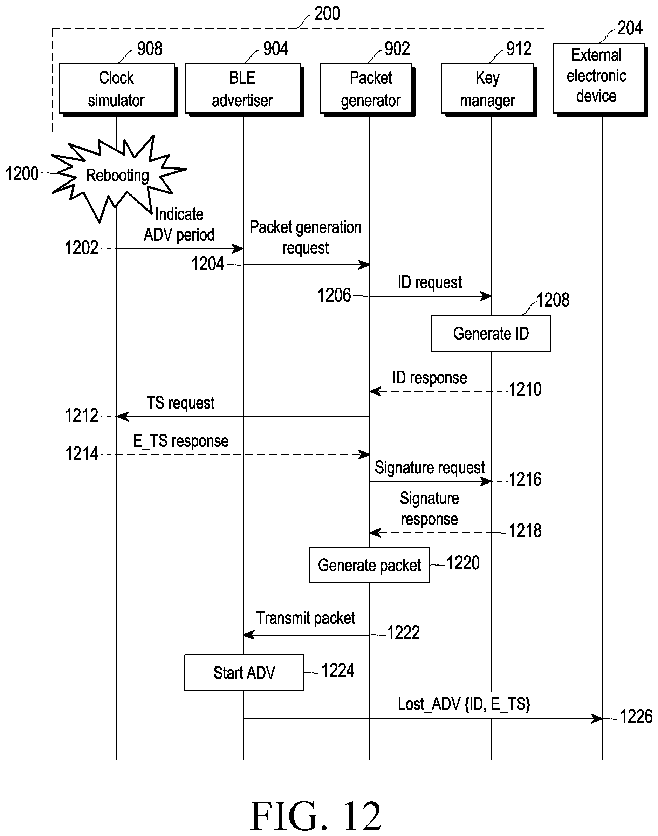

In operation 725, the electronic device 200 (e.g., the processor 306) may generate a lost advertising packet including the ID (e.g., the privacy ID 514) of the electronic device 200 and a time stamp (e.g., TS) synchronized with the tick count of the electronic device 200. In an embodiment, operation 725 may include operations 1202, 1204, 1206, 1208, 1210, 1212, 1214, 1216, 1218, and 1220 of FIG. 12.

In operation 730, the electronic device 200 (e.g., the processor 306) may broadcast the advertising packet (e.g., the lost advertising packet) including the ID (e.g., the privacy ID) 514 and the time stamp (e.g., E_TS or TS) at every specified advertising interval.

In operation 735, the electronic device 200 (e.g., the processor 306) may receive a clock synchronization request message (e.g., an encrypted clock synchronization request message) through a connection (e.g., a BLE connection) established with the external electronic device 204. In an embodiment, when the electronic device 200 (e.g., the processor 306) receives a connection request (e.g., a BLE connection request) from the external electronic device 204 in the lost mode, it may accept the connection request (e.g., the BLE connection request) and establish the BLE connection.

In operation 740, the electronic device 200 (e.g., the processor 306) may decrypt the clock synchronization request message using the already known key information (e.g., the key information obtained in operation 705), obtain the time stamp of the server 206 from the decrypted clock synchronization request message, and perform clock synchronization based on the time stamp. In an embodiment, the clock synchronization performed by the electronic device 200 (e.g., the processor 306) may include setting the tick count to an initial value based on the time stamp of the server 206 and increasing the tick count every specified time unit.

After the clock synchronization, the electronic device 200 (e.g., the processor 306) may return to operation 725 and continue to perform the lost advertising based on the time stamp synchronized with the server 206. In an embodiment, the electronic device 200 (e.g., the processor 306) may decrypt the clock synchronization request message by authenticating signature data included in the clock synchronization request message using the key information. In an embodiment, when the electronic device 200 (e.g., the processor 306) fails to decrypt the clock synchronization request message using the key information, the electronic device 200 (e.g., the processor 306) may delete the clock synchronization request message and release the BLE connection.

In operation 745, the electronic device 200 (e.g., the processor 306) may determine whether it is connected to the central device 202 (e.g., the electronic device 101). In an embodiment, when the user determines the location of the electronic device 200 through the central device 202 or an external electronic device (e.g., the external electronic device 208) and approaches the vicinity of the electronic device 200 while carrying the central device 202, the electronic device 200 (e.g., the processor 306) may re-establish the connection with the central device 202. When connected to the central device 202, the electronic device 200 (e.g., the processor 306) may stop the lost advertising in operation 750. When not connected to the central device 202, the electronic device 200 (e.g., the processor 306) may return to operation 725 and continue the lost advertising based on the synchronized time stamp.

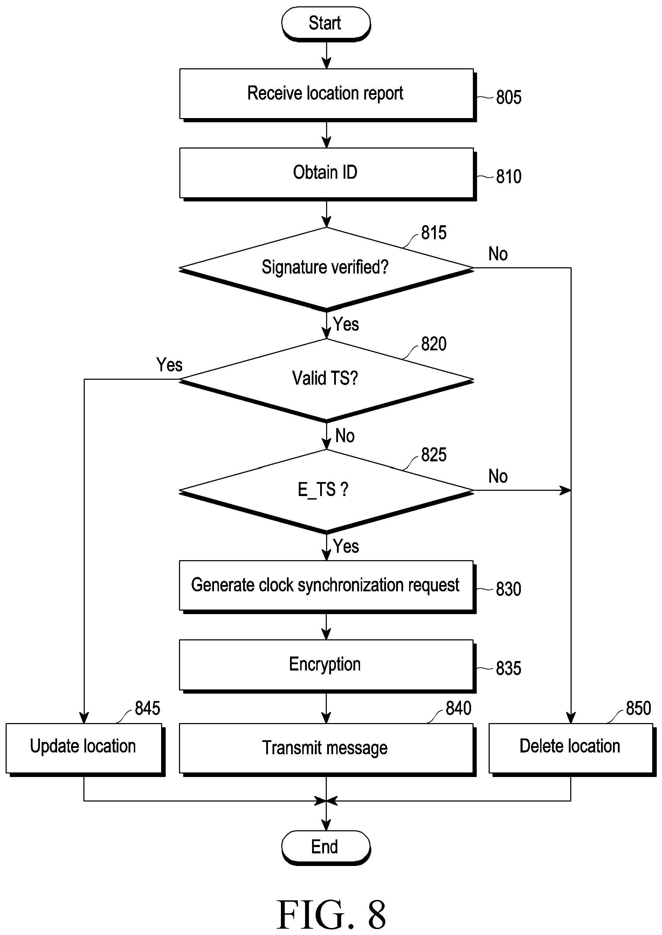

FIG. 8 is a flowchart illustrating offline finding in a server according to an embodiment. In an embodiment, the operations described below may be performed by the processor 316 of the server 206. According to embodiments, at least one of the operations described below may be omitted, modified, or changed in order.

Referring to FIG. 8, in operation 805, the server 206 (e.g., the processor 316) may receive a location report including a lost advertising packet (e.g., the lost advertising packet 500) or the service data 502 from an external electronic device (e.g., the external electronic device 204). Although not shown, the server 206 (e.g., the processor 316) may receive information indicating that the electronic device 200 has been onboarded (e.g., registered and synchronized) through the central device 202 before operation 805. The server 206 (e.g., the processor 316) may share key information that may be used for lost advertising through the onboarding procedure. In operation 810, the server 206 (e.g., the processor 316) may obtain the ID (e.g., the privacy ID 514) of the electronic device 200 included in the service data 502. The server 206 (e.g., the processor 316) may identify the electronic device 200 based on the privacy ID 514.

In operation 815, the server 206 (e.g., the processor 316) may authenticate the service data 502 using the signature data 520 included in the service data 502. In an embodiment, the server 206 (e.g., the processor 316) may authenticate the service data 502 by verifying whether the service data 502 including the signature data 520 has been forged and/or tampered using the already known key information of the electronic device 200. When the authentication of the service data 502 is not successful, the server 206 (e.g., the processor 316) may discard (e.g., delete) or drop the location report in operation 850.

In operation 820, upon successful authentication of the service data 502, the server 206 (e.g., the processor 316) may determine whether the time stamp 518 included in the service data 502 is valid. In an embodiment, when a time indicated by the time stamp 518 is within a certain range from a time of the server 206, the server 206 (e.g., the processor 316) may determine that the time stamp 518 is valid and proceed to operation 845. In operation 845, the server 206 (e.g., the processor 316) may update a current location of the electronic device 200 based on location information included in the location report.

In operation 825, as the time stamp 518 is determined to be invalid, the server 206 (e.g., the processor 316) may determine whether the time stamp 518 is set to a specified value (e.g., the empty time stamp E_TS). When the time stamp 518 is not set to the specified value (e.g., E_TS), the server 206 (e.g., the processor 316) may proceed to operation 850 to delete the location report. On the contrary, when the time stamp 518 is set to the specified value (e.g., E_TS), the server 206 (e.g., the processor 316) may proceed to operation 830 to perform clock synchronization for the electronic device 200. When the time stamp 518 is set to the specified value (e.g., E_TS), the server 206 (e.g., the processor 316) may drop the location information included in the location report without storing it.

In operation 830, the server 206 (e.g., the processor 316) may generate a clock synchronization request message including the time stamp of the server 206. In operation 835, the server 206 (e.g., the processor 316) may encrypt the clock synchronization request message based on the key information of the electronic device 200. In an embodiment, the server 206 (e.g., the processor 316) may encrypt the clock synchronization request message by including signature data generated based on the key information of the electronic device 200 in the clock synchronization request message.

In operation 840, the server 206 (e.g., the processor 316) may transmit a remote operation message including the encrypted clock synchronization request message and the ID (e.g., the privacy ID 514) of the electronic device 200 to the external electronic device (e.g., the external electronic device 204) that transmitted the location information in operation 805.

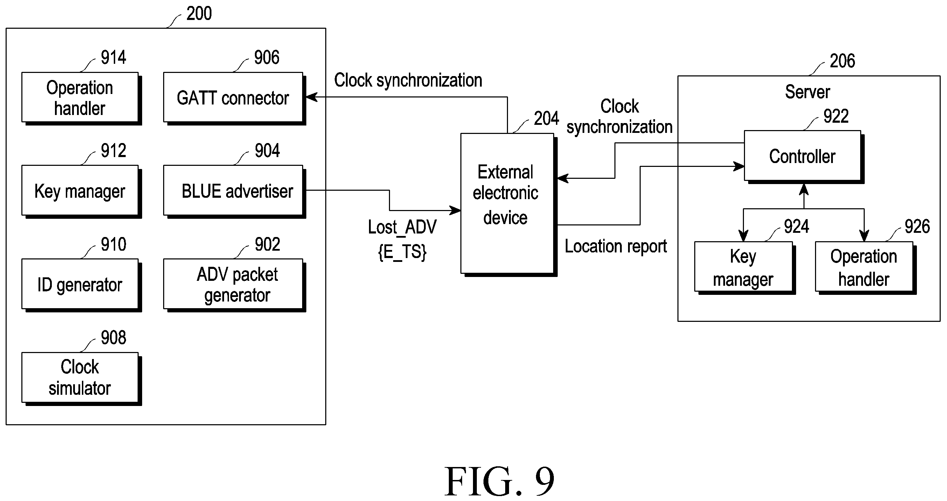

FIG. 9 illustrates an exemplary system architecture for an offline finding network according to an embodiment.

Referring to FIG. 9, the electronic device 200 configured to perform lost advertising in the lost mode may include at least one of an advertising (ADV) packet generator 902, a BLE advertiser 904, a GATT connector 906, a clock simulator 908, an ID generator 910, a key manager 912, or an operation handler 914. In an embodiment, at least one of the illustrated components 902, 904, 906, 908, 910, 912, and 914 may be implemented as a software block executed by the processor 306 of the electronic device 200.

The server 206 configured to support clock synchronization of the electronic device 200 may include at least one of a controller 922, a key manager 924, or an operation manager 926. In an embodiment, at least one of the illustrated components may be implemented as a software block executed by the processor 316 of the server 206.

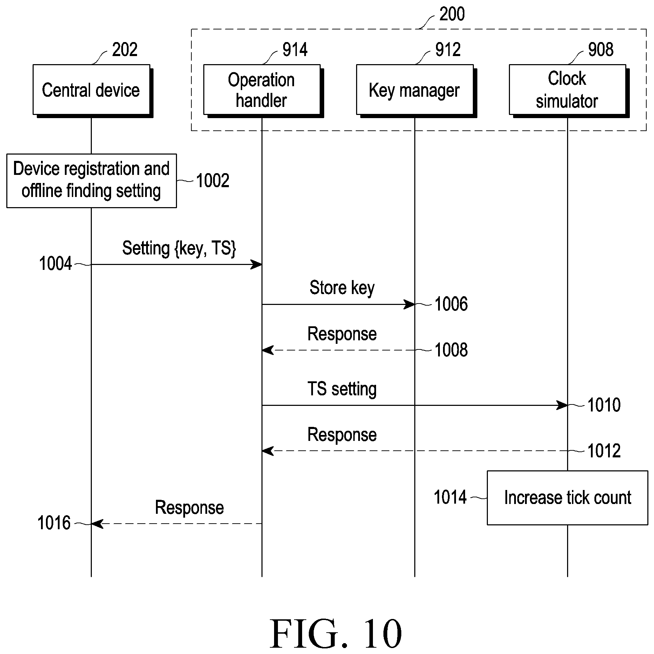

FIG. 10 is a sequence diagram illustrating a signal flow for an offline finding setting according to an embodiment. According to embodiments, at least one of the operations described below may be omitted, modified, or changed in order.

Referring to FIG. 10, in operation 1002, an external electronic device (e.g., the central device 202) may activate an offline finding setting for an electronic device (e.g., the electronic device 200) according to a user input. In an embodiment, when the central device 202 is first connected to the electronic device 200 or onboards the electronic device 200, the central device 202 may output a UI querying the user whether to activate the offline finding setting, and activate the offline finding setting based on the UI.

In operation 1004, the electronic device 200 (e.g., the operation handler 914) may receive, from the central device 202, setting information {key, TS} that includes key information (e.g., a secret key and an initial vector) for ID generation and secure communication in an offline situation and a time stamp (e.g., a reference time stamp) of the central device 202. In an embodiment, the central device 202 may obtain the key information and/or the reference time stamp from the server 206 and transmit it to the electronic device 200. In an embodiment (not shown), the electronic device 200 (e.g., the key manager 912) may generate the key information during the onboarding procedure and register it to the server 206 through the central device 202.

The electronic device 200 (e.g., the operation handler 914) may store the key information in the key manager 912 in operation 1006 and receive a response from the key manager 912 in operation 1008. The electronic device 200 (e.g., the operation handler 914) may transmit the reference time stamp to the clock simulator 908 in operation 1010 and receive a response from the clock simulator 908 in operation 1012. In operation 1014, the electronic device 200 (e.g., the clock simulator 908) may perform clock simulation by increasing a tick count, starting from the reference time stamp.

In an embodiment, the secret key and the initial vector included in the key information may be uniquely assigned to the electronic device 200 and used as a seed for generating a privacy ID (e.g., the privacy ID 514) for BLE advertising. In an embodiment, the privacy ID 514 may include some bits of a value resulting from performing a hash operation (e.g., SHA256) using the secret key and the initial vector based on unique identification information (e.g., a MAC address) about the electronic device 200.

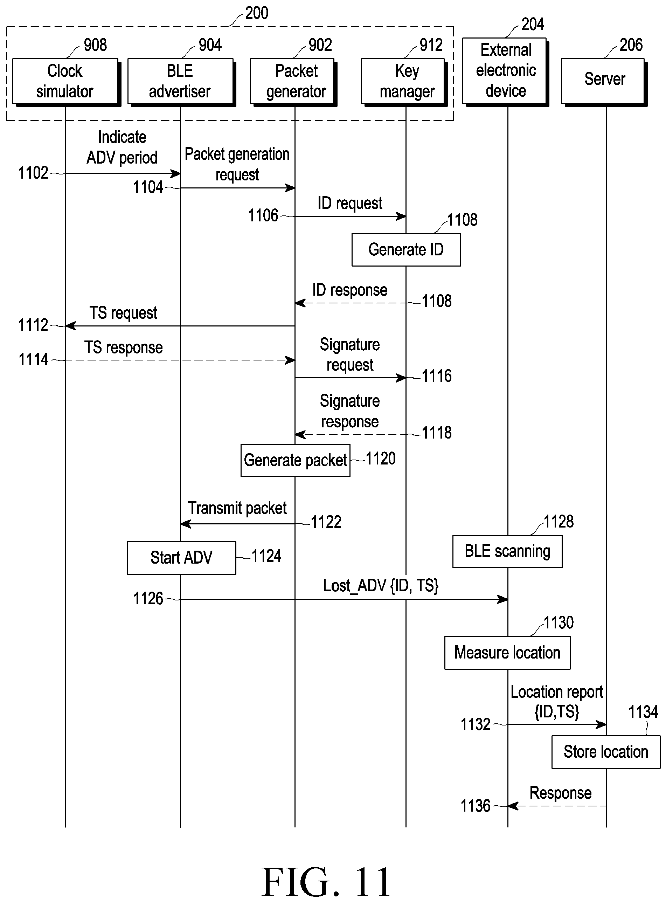

FIG. 11 is a sequence diagram illustrating a signal flow for location reporting in an offline situation according to an embodiment. According to embodiments, at least one of the operations described below may be omitted, modified, or changed in order.

Referring to FIG. 11, in operation 1102, the electronic device 200 (e.g., the clock simulator 908) in which offline finding has been activated and which is in the lost mode may transmit, to the BLE advertiser 904, a signal indicating that an expire event for advertising has occurred (e.g., a transmission time is imminent or reached according to a specified advertising interval). In operation 1104, the electronic device 200 (e.g., the BLE advertiser 904) may request the packet generator 902 to generate an advertising packet. In operation 1106, the electronic device 200 (e.g., the packet generator 902) may request the key manager 912 to generate an ID for advertising.

In operation 1108, the electronic device 200 (e.g., the key manager 912) may generate the ID (e.g., the privacy ID 514) based on key information (e.g., the key information stored in operation 1006). In an embodiment, the electronic device 200 (e.g., the key manager 912) may generate the privacy ID 514 based on the key information (e.g., the secret key and/or initial vector shared with the server 206), and the privacy ID may be changed at every specified time interval, for security. In operation 1110, the electronic device 200 (e.g., the key manager 912) may transmit the privacy ID 514 to the packet generator 902.

In operation 1112, the electronic device 200 (e.g., the packet generator 902) may request a time stamp for advertising to the clock simulator 908. In operation 1114, the electronic device 200 (e.g., the clock simulator 908) may transmit the time stamp (e.g., the time stamp 518) generated based on the tick count synchronized in operation 1014 to the packet generator 902. In an embodiment, the electronic device 200 (e.g., the clock simulator 908) may generate the time stamp 518 based on a clock synchronized with the server 206.

In operation 1116, the electronic device 200 (e.g., the packet generator 902) may request a signature for advertising from the key manager 912. In an embodiment, the electronic device 200 (e.g., the packet generator 902) may generate the service data 502 including the privacy ID 514, optionally additional information (e.g., the extra data 516) required for the service, and the time stamp 518 for defense against a relay attack, and transmit the service data 502 to the key manager 912. In operation 1118, the electronic device 200 (e.g., the key manager 912) may include the signature data 520 signed with the key information in the service data 502 and return it to the packet generator 902.

In operation 1120, the electronic device 200 (e.g., the packet generator 902) may generate an advertising packet (e.g., the lost advertising packet 500) including the service data 502. In an embodiment, the electronic device 200 (e.g., the packet generator 902) may generate the lost advertising packet 500 including at least the privacy ID 514, the time stamp 518, and the signature data 520. In operation 1122, the electronic device 200 (e.g., the packet generator 902) may transmit the lost advertising packet 500 to the BLE advertiser 904. In operation 1124, the electronic device 200 (e.g., the BLE advertiser 904) may determine an advertising time. In operation 1126, the electronic device 200 (e.g., the BLE advertiser 904) may broadcast the lost advertising packet 500 transmitted from the packet generator 902.

In operation 1128, the external electronic device 204 may perform BLE scanning to support offline finding according to user settings or a system configuration, and receive the lost advertising packet 500 through the BLE scanning. In operation 1130, the external electronic device 204 may measure a current location of the external electronic device 204 based on identifying that the lost advertising packet 500 has been transmitted in the lost mode. In operation 1132, the external electronic device 204 may transmit a location report including the measured location to the server 206, together with the lost advertising packet 500 or the service data 502 of the lost advertising packet 500.

In an embodiment, the external electronic device 204 may maintain a privacy ID (e.g., the privacy ID 514) and a MAC address for a scanned device (e.g., the electronic device 200) during the BLE scanning, for example, as illustrated in <Table 1> below. In an embodiment, the external electronic device 204 may store the entire service data 502 or the privacy ID 514 included in the service data 502.

**[Table 1]**

| | |
|---|---|
| Privacy ID /service data | MAC address |
| U6Oxdn3EY1LmYbZq | 3D:45:AB:80 |
| EEs0fKPdRWndC3Ix | A3:59:C9:34 |

<Table 2> below illustrates an example of a location report that the external electronic device 204 reports to the server 206.

**[Table 2]**

| |
|---|
| {"privateId": "U6Oxdn3EY1LmYbZq", "clientVersion":"1.2.2.8", |
| "serviceData":"AFOjsXZ9xGNS5mG2akI=", |
| "geolocation": { |
| "gpsUtcDt" : "2022-05-04 01:25:41", "coupled": false, |
| "method":"wifi", "accuracy":20.80699920654297, "speed":0,"rssi":-77, |
| "latitude":37.2589016,"longitude":127.0560077} |
| } } |

In an embodiment, the location report may include a privacy ID ("privateld") (e.g., the privacy ID 514), service data (e.g., the service data 502), and location information. In an embodiment, the location information (e.g., "geolocation") may include a latitude and a longitude. In an embodiment, the location information may include at least one of a GPS time, a connection type, an accuracy, a speed, or a received signal strength (e.g., received signal strength indicator (RSSI)).

In operation 1134, the server 206 may verify the location report and store the location as location information about the electronic device 200. In an embodiment, the server 206 may identify the electronic device 200 related the location information using the already known key information. In an embodiment, when the time stamp 518 is within a certain time range from the time of the server 206, the server 206 may determine that the time stamp (e.g., the time stamp 518) in the service data (e.g., the service data 502) included in the location report is valid, and when it is outside the time range, drop the time stamp 518. In an embodiment, the server 206 may verify whether the service data 502 has been forged/modified by verifying the signature data (e.g., the signature data 520) in the service data (e.g., the service data 502) included in the location report using the key information.

In an embodiment, the server 206 may analyze the privacy ID (e.g., the privacy ID 514) to identify the electronic device 200, and when the time stamp 518 and the signature data 520 are valid, update the current location of the electronic device 200.

In operation 1136, the server 206 may transmit, to the external electronic device 204, a response indicating that the location report has been completely processed. The user may then identify the location of the electronic device 200 through the central device 202 or an external electronic device (e.g., the external electronic device 208).

FIG. 12 is a sequence diagram illustrating a signal flow for lost advertising after rebooting according to an embodiment. According to embodiments, at least one of the operations described below may be omitted, modified, or changed in order.

Referring to FIG. 12, in operation 1200, the electronic device 200 (e.g., the clock simulator 908) may recognize that a clock (e.g., a tick count synchronized with the server 206) has been lost. In an embodiment, when the battery of the electronic device 200 (e.g., a location tracker) is removed and reinserted, when the electronic device 200 (e.g., an earbud) is discharged and recharged, or when the electronic device 200 is rebooted, clock information (e.g., a tick count) stored in the electronic device 200 (e.g., the clock simulator 908) may be deleted or maintained as past information (clock information before rebooting), and the electronic device 200 (e.g., the clock simulator 908) may lose the clock synchronized with the server 206.

In operation 1202, the electronic device 200 (e.g., the clock simulator 908) in which offline finding has been activated and which is in the lost mode may transmit, to the BLE advertiser 904, a signal indicating that a transmission time is imminent or reached according to a specified advertising interval. In operation 1204, the electronic device 200 (e.g., the BLE advertiser 904) may request the packet generator 902 to generate an advertising packet. In operation 1206, the electronic device 200 (e.g., the packet generator 902) may request the key manager 912 to generate an ID for advertising.

In operation 1208, the electronic device 200 (e.g., the key manager 912) may generate the ID (e.g., the privacy ID 514) based on key information (e.g., the key information stored in operation 1006). In an embodiment, the electronic device 200 (e.g., the key manager 912) may generate the privacy ID 514 based on the key information (e.g., the secret key and/or initial vector shared with the server 206), and the privacy ID may be changed at every specified time interval, for security. In operation 1210, the electronic device 200 (e.g., the key manager 912) may transmit the privacy ID 514 to the packet generator 902.

In operation 1212, the electronic device 200 (e.g., the packet generator 902) may request a time stamp for advertising from the clock simulator 908. In operation 1214, the electronic device 200 (e.g., the clock simulator 908) may recognize, for example, clock loss caused by the rebooting, and transmit a time stamp (e.g., the time stamp 518) set to a specified value (e.g., the empty time stamp E_TS) to the packet generator 902.

In operation 1216, the electronic device 200 (e.g., the packet generator 902) may request a signature for advertising from the key manager 912. In an embodiment, the electronic device 200 (e.g., the packet generator 902) may generate the service data 502 including the privacy ID 514, optionally additional information (e.g., the extra data 516) required for the service, and the time stamp 518 set to the specified value E_TS, and transmit the service data 502 to the key manager 912. In operation 1218, the electronic device 200 (e.g., the key manager 912) may include the signature data 520 signed with the key information in the service data 502 and return it to the packet generator 902.

In operation 1220, the electronic device 200 (e.g., the packet generator 902) may generate an advertising packet (e.g., the lost advertising packet 500) including the service data 502. In operation 1222, the electronic device 200 (e.g., the packet generator 902) may transmit the lost advertising packet 500 to the BLE advertiser 904. In operation 1224, the electronic device 200 (e.g., the BLE advertiser 904) may determine an advertising time. In operation 1226, the electronic device 200 (e.g., the BLE advertiser 904) may broadcast the lost advertising packet 500 (e.g., including at least the privacy ID 514 and the time stamp 518 set to the specified value E_TS) transmitted from the packet generator 902.

Although not shown, operations 1128, 1130, and 1132 may then be performed. For example, in operation 1128, the external electronic device 204 may perform BLE scanning to receive the lost advertising packet 500 including the time stamp 518 set to E_TS. In operation 1130, the external electronic device 204 may measure a current location of the external electronic device 204, based on identifying that the lost advertising packet 500 has been transmitted in the lost mode. In operation 1132, the external electronic device 204 may transmit a location report including the measured location to the server 206, along with the service data 502 of the lost advertising packet 500.

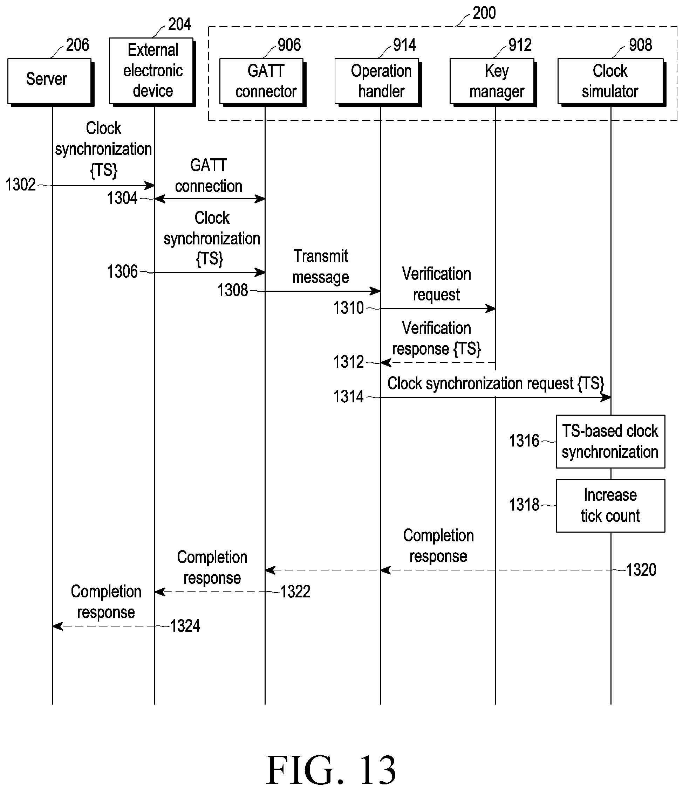

FIG. 13 is a sequence signal flow for clock synchronization for lost advertising according to an embodiment. According to embodiments, at least one of the operations described below may be omitted, modified, or changed in order.

Referring to FIG. 13, in operation 1302, the server 206 may transmit a clock synchronization request for the electronic device 200 to the external electronic device 204. In an embodiment, the server 206 may transmit a clock synchronization request encrypted with key information of the electronic device 200 to the external electronic device 204 by executing at least one of operations 805, 810, 815, 820, 825, 830, and 835 of FIG. 8, for example. In an embodiment, the server 206 may transmit, to the external electronic device 204, a remote operation message including the ID (e.g., the privacy ID 514 obtained from a location report of the external electronic device 204) of the electronic device 200 and an encrypted clock synchronization request message. The encrypted clock synchronization request message may include a time stamp of the server 206. The remote operation message may include information requesting the external electronic device 204 to transmit the encrypted clock synchronization request message to the electronic device 200 having the ID.

In an embodiment, the clock synchronization request message may be configured as illustrated in <Table 3> below.

**[Table 3]**

| |
|---|
| { |
| "requestId":"180673561640550829","operation":"TimeSync" ,"oprnStatusCo de":"1000", |
| "data":{ |
| "timestamp": 16552075414 |
| } |
| } |

According to <Table 3>, the clock synchronization request message may include the time stamp of the server 206.

In an embodiment, the remote operation message may be configured as illustrated in <Table 4> below.

**[Table 4]**

| |
|---|
| {"ID": "U60xdn3EY1LmYbZq", |
| "remoteOperation":"EkRVkS+P8N2cWGDpxkZROoIYgOWGepdcNoob3TGEJbwsEJXSYfF DQq8eFbd/USH1+kRpYjIBZOHGZPYbNF+7tCMMcOmAWcIin5WskUKGikBGE1Pf+FThZQkWoyV16efJ S9gS1J33/X9a+UQywSm2DEYRR2cEfX8KDWpeSL7uFagDVAL/E6eN1+7Vn+6BugLe/K6RFTcIkE9Z/ EUfoTHh21c5CfnGM+WdFLY1J1WmmPbCxZwnG3GPvb+ymHGP+D10S845rKLAuwMB4HQkijeYs6jAgc rHxXMbodiqG1zKXbwmi5i3N/zM/7uAHfkC1o/iggGImCzBM4kVV/afWmck9w==" |
| } |

According to <Table 4>, "ID" may include the privacy ID 514 of the electronic device 200. "remoteOperation" may mean requesting that the following encrypted clock synchronization request message be transmitted to a target (e.g., the electronic device 200) indicated by the "ID." The encrypted clock synchronization request message may be placed after "remoteOperation." Since the clock synchronization request message is included in a form encrypted with the key information of the electronic device 200 in the remote operation message and transmitted to the external electronic device 204, an external electronic device (e.g., the external electronic device 204) other than the electronic device 200 may not interpret the clock synchronization request message.

In operation 1304, the external electronic device 204 may establish a GATT connection (e.g., the GATT connector 906) with the electronic device 200 according to a BLE communication protocol. In an embodiment, the external electronic device 204 may transmit a connection request to the electronic device 200 (e.g., the GATT connector 906), and after receiving a connection response from the electronic device 200 (e.g., the GATT connector 906), transmit a GATT service request.

In an embodiment, the external electronic device 204 may identify an "ID" (e.g., the privacy ID 514 of the electronic device 200) included in the remote operation message received from the server 206, after transmitting the location report, and detect the MAC address of the target device (e.g., the electronic device 200) to be connected based on the "ID" from a device scanning list discovered through BLE scanning. The external electronic device 204 may transmit the connection request to the electronic device 200 based on the MAC address.

In operation 1306, the external electronic device 204 may transmit the encrypted clock synchronization request message to the electronic device 200 (e.g., the GATT connector 906) through the GATT connection.

In operation 1308, the electronic device 200 (e.g., the GATT connector 906) may transmit the encrypted clock synchronization request message to the operation handler 914. In operation 1310, the electronic device 200 (e.g., the operation handler 914) may request the key manager 1310 to verify the encrypted clock synchronization request message. The electronic device 200 (e.g., the key manager 912) may decrypt the encrypted clock synchronization request message using already known key information (e.g., key information shared with the server 206). When the decryption is successful, the electronic device 200 (e.g., the key manager 912) may determine that the encrypted clock synchronization request message has been verified.

In operation 1312, the electronic device 200 (e.g., the key manager 912) may obtain a time stamp of the server 206 from the decrypted clock synchronization request message and transmit it to the operation handler 914. In operation 1314, the electronic device 200 (e.g., the operation handler 914) may transmit the time stamp to the clock simulator 908. In operation 1316, the electronic device 200 (e.g., the clock simulator 908) may perform clock synchronization based on the received time stamp, thereby restoring lost time stamp information with the received time stamp. In operation 1318, the electronic device 200 (e.g., the clock simulator 908) may perform clock simulation by increasing a tick count based on the restored time stamp.

In operation 1320, the electronic device 200 (e.g., the clock simulator 908) may transmit a completion response indicating that the clock synchronization is complete to the GATT connector 906 through the operation handler 914. In operation 1322, the electronic device 200 (e.g., the GATT connector 906) may transmit the completion response to the external electronic device 204. In operation 1324, the external electronic device 204 may transmit the completion response to the server 206.

In an embodiment, the electronic device 200 (e.g., the clock simulator 908) may generate a time stamp (e.g., the time stamp 518) based on the tick count synchronized with the server 206 in operation 1318.

The electronic device 200 according to an embodiment may include the communication circuit 304, and the at least one processor 306 operatively coupled to the communication circuit. The at least one processor may be configured to identify that the electronic device is rebooted a specified time after a connection to a first external electronic device 202 is released. The at least one processor may be configured to generate an advertising packet including a first time stamp of a specified value based on the rebooting. The at least one processor may be configured to broadcast the advertising packet through the communication circuit. The at least one processor may be configured to receive a message including a second time stamp of a server from a second external electronic device 204 through the communication circuit, after broadcasting the advertising packet. The at least one processor may be configured to set a tick count of the electronic device based on the second time stamp of the server.

In an embodiment, the at least one processor may be configured to obtain the second time stamp by decrypting the message using key information shared with the server.

In an embodiment, the at least one processor may be configured to obtain a reference time stamp for synchronization with the server and the key information from the first external electronic device during onboarding through the connection to the first external electronic device before the rebooting.

In an embodiment, the at least one processor may be configured to determine to enter a lost mode based on the specified time elapsing after the connection to the first external electronic device is released.

In an embodiment, the at least one processor may be configured to generate a privacy ID of the electronic device based on the key information, generate the first time stamp of the specified value based on the rebooting, generate signature data for the privacy ID and the first time stamp based on the key information, and generate the advertising packet including the privacy ID, the first time stamp, and the signature data.

In an embodiment, the at least one processor may be configured to determine that the electronic device is not synchronized with the server, when the electronic device is rebooted after onboarding to the server.

In an embodiment, the at least one processor may be configured to receive the message through a BLE connection between the electronic device and the second external electronic device 204.

In an embodiment, the at least one processor may be configured to broadcast an advertising packet including a third time stamp generated based on the set tick count.

The server 206 according to an embodiment may include the communication circuit 314, and the at least one processor 316 operatively coupled to the communication circuit. The at least one processor may be configured to receive a location report from a first external electronic device 204 through the communication circuit. The at least one processor may be configured to identify the electronic device 200 performing lost advertising from the location report. The at least one processor may be configured to determine whether the location report includes a first time stamp of a specified value. The at least one processor may be configured to, when the location report includes the first time stamp of the specified value, transmit a message including a second time stamp of the server to the electronic device through the first external electronic device.

In an embodiment, the at least one processor may be configured to encrypt the message using key information shared with the electronic device.

In an embodiment, the at least one processor may be configured to transmit a reference time stamp and the key information to the electronic device through a second external electronic device 202 during onboarding of the electronic device through a connection to the second external electronic device 202.

A method of operating the electronic device 200 according to an embodiment may include identifying (715) that the electronic device is rebooted a specified time after a connection to a first external electronic device 202 is released. The method may include generating (725) an advertising packet including a first time stamp of a specified value based on the rebooting. The method may include broadcasting (730) the advertising packet. The method may include receiving (735) a message including a second time stamp of a server from the second external electronic device 204, after broadcasting the advertising packet. The method may include setting (740) a tick count of the electronic device based on the second time stamp of the server.

In an embodiment, the method may further include obtaining the second time stamp by decrypting the message using key information shared with the server.

In an embodiment, the method may further include obtaining (705) a reference time stamp for synchronization with the server and the key information from the first external electronic device 202 during onboarding through the connection to the first external electronic device 202 before the rebooting.

In an embodiment, the method may further include entering a lost mode based on the specified time elapsing after the connection to the first external electronic device 202 is released (710).

In an embodiment, generating (725) the advertising packet may include generating (1106, 1108, 1110) a privacy ID of the electronic device based on the key information, generating (1112, 1114) the first time stamp of the specified value based on the rebooting, generating (1216, 1218) signature data for the privacy ID and the first time stamp based on the key information, and generating (1220) the advertising packet including the privacy ID, the first time stamp, and the signature data.

In an embodiment, identifying (715) that the electronic device is rebooted may include determining that the electronic device is not synchronized with the server, when the electronic device is rebooted after onboarding to the server.

In an embodiment, the message may be received through a BLE connection between the electronic device and the second external electronic device 204.

In an embodiment, the method may further include broadcasting (715, 730) an advertising packet including a third time stamp generated based on the set tick count.

A method of operating the server 206 according to an embodiment may include receiving (805) a location report from a first external electronic device 204. The method may include identifying (810) the electronic device 200 performing lost advertising from the location report. The method may include determining (825) whether the location report includes a first time stamp of a specified value. The method may include, when the location report includes the first time stamp of the specified value, transmitting (830, 835, 840) a message including a second time stamp of the server to the electronic device through the first external electronic device 204.

In an embodiment, transmitting the message may include encrypting (835) the message using key information shared with the electronic device.

In an embodiment, the method may further include transmitting (1004) a reference time stamp and the key information to the electronic device through a second external electronic device 202 during onboarding of the electronic device through a connection to the second external electronic device 202.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (200) comprising:
communication circuitry (304);
at least one processor (306) operatively coupled to the communication circuitry (304); and
memory (308) storing instructions,
wherein the instructions, when executed by the at least one processor (306), cause the electronic device to:
reboot a designated time after a connection to a first external electronic device (202) is released,
generate an advertising packet including a first time stamp of a designated value indicating the reboot,
broadcast the advertising packet through the communication circuitry (304),
receive a message including a second time stamp of a server from a second external electronic device (204) through the communication circuitry (304), after broadcasting the advertising packet, and
set a tick count of the electronic device (200) based on the second time stamp of the server.

2. The electronic device (200) of claim 1, wherein the instructions, when executed by the at least one processor (306), cause the electronic device to obtain the second time stamp by decrypting the message using key information shared with the server.

3. The electronic device (200) of claim 2, wherein the instructions, when executed by the at least one processor (306), cause the electronic device to obtain a reference time stamp for synchronization with the server and the key information from the first external electronic device (202) during onboarding through the connection to the first external electronic device (202) before the reboot.

4. The electronic device (200) of any one of claims 1 to 3, wherein the instructions, when executed by the at least one processor (306), cause the electronic device to determine to enter a lost mode based on the designated time elapsing after the connection to the first external electronic device (202) is released.

5. The electronic device (200) of any one of claims 2 to 4, wherein the instructions, when executed by the at least one processor (306), cause the electronic device to:
generate a privacy ID of the electronic device (200) based on the key information,
generate the first time stamp of the designated value indicating the reboot,
generate signature data for the privacy ID and the first time stamp based on the key information, and
generate the advertising packet including the privacy ID, the first time stamp, and the signature data.

6. The electronic device (200) of any one of claims 1 to 5, wherein the instructions, when executed by the at least one processor (306), cause the electronic device to receive the message through a Bluetooth low energy, BLE, connection between the electronic device (200) and the second external electronic device (204).

7. The electronic device (200) of any one of claims 1 to 6, wherein the instructions, when executed by the at least one processor (306), cause the electronic device to broadcast an advertising packet including a third time stamp generated based on the set tick count.

8. A server (206) comprising:
communication circuitry (314);
at least one processor (316) operatively coupled to the communication circuitry (314); and
memory (318) storing instructions,
wherein the instructions, when executed by the at least one processor (316), cause the server to:
receive a location report from a first external electronic device (204) through the communication circuitry (314),
identify an electronic device (200) performing lost advertising from the location report,
determine whether the location report includes a first time stamp of a designated value indicating that the electronic device has been rebooted after the onboarding or synchronization with the server, and
when the location report includes the first time stamp of the designated value, transmit a message including a second time stamp of the server to the electronic device (200) through the first external electronic device (204).

9. The server of claim 8, wherein the instructions, when executed by the at least one processor (316), cause the server to encrypt the message using key information shared with the electronic device (200).

10. The server of claim 9, wherein the instructions, when executed by the at least one processor (316), cause the server to transmit a reference time stamp and the key information to the electronic device (200) through a second external electronic device (202) during onboarding of the electronic device (200) through a connection to the second external electronic device (202).

11. A method of operating an electronic device (200), comprising:
rebooting a designated time after a connection to a first external electronic device (202) is released;
generating (725) an advertising packet including a first time stamp of a designated value indicating the rebooting;
broadcasting (730) the advertising packet;
receiving (735) a message including a second time stamp of a server from a second external electronic device (204), after broadcasting the advertising packet; and
setting (740) a tick count of the electronic device (200) based on the second time stamp of the server.

12. The method of claim 11, further comprising:
obtaining the second time stamp by decrypting the message using key information shared with the server, and
obtaining (705) a reference time stamp for synchronization with the server and the key information from the first external electronic device (202) during onboarding through the connection to the first external electronic device (202) before the rebooting.

13. The method of claim 12, wherein generating (725) the advertising packet includes:
generating (1106, 1108, 1110) a privacy ID of the electronic device (200) based on the key information,
generating (1112, 1114) the first time stamp of the designated value based on the rebooting,
generating (1216, 1218) signature data for the privacy ID and the first time stamp based on the key information, and
generating (1220) the advertising packet including the privacy ID, the first time stamp, and the signature data.

14. A method of operating a server (206), comprising:
receiving (805) a location report from a first external electronic device (204);
identifying (810) an electronic device (200) performing lost advertising from the location report;
determining (825) whether the location report includes a first time stamp of a designated value indicating that the electronic device has been rebooted after the onboarding or synchronization with the server; and
when the location report includes the first time stamp of the designated value, transmitting (830, 835, 840) a message including a second time stamp of the server to the electronic device (200) through the first external electronic device (204).

15. The method of claim 14, wherein transmitting the message includes encrypting (835) the message using key information shared with the electronic device (200), and
wherein the method further comprises transmitting (1004) a reference time stamp and the key information to the electronic device (200) through a second external electronic device (202) during onboarding of the electronic device (200) through a connection to the second external electronic device (202).

## Patentansprüche

1. Elektronische Vorrichtung (200), umfassend:
eine Kommunikationsschaltung (304);
mindestens einen Prozessor (306), der funktionsfähig mit der Kommunikationsschaltung (304) gekoppelt ist; und
einen Speicher (308), in dem Befehle gespeichert sind,
wobei die Befehle, wenn sie von dem mindestens einen Prozessor (306) ausgeführt werden, die elektronische Vorrichtung dazu veranlassen:
eine festgelegte Zeit nach dem Lösen einer Verbindung zu einer ersten externen elektronischen Vorrichtung (202) neu zu starten,
ein Ankündigungspaket zu erzeugen, das einen ersten Zeitstempel eines festgelegten Werts enthält, der den Neustart angibt,
das Ankündigungspaket über die Kommunikationsschaltung (304) zu senden,
eine Nachricht, die einen zweiten Zeitstempel eines Servers enthält, von einer zweiten externen elektronischen Vorrichtung (204) über die Kommunikationsschaltung (304) nach dem Senden des Ankündigungspakets zu empfangen, und
eine Tick-Zählung der elektronischen Vorrichtung (200) auf der Grundlage des zweiten Zeitstempels des Servers einzustellen.

2. Elektronische Vorrichtung (200) nach Anspruch 1, wobei die Befehle, wenn sie von dem mindestens einen Prozessor (306) ausgeführt werden, die elektronische Vorrichtung dazu veranlassen, den zweiten Zeitstempel durch Entschlüsseln der Nachricht unter Verwendung von Schlüsselinformationen zu erhalten, die mit dem Server geteilt werden.

3. Elektronische Vorrichtung (200) nach Anspruch 2, wobei die Befehle, wenn sie von dem mindestens einen Prozessor (306) ausgeführt werden, die elektronische Vorrichtung dazu veranlassen, einen Referenzzeitstempel zur Synchronisation mit dem Server und die Schlüsselinformationen von der ersten externen elektronischen Vorrichtung (202) während des Onboardings über die Verbindung mit der ersten externen elektronischen Vorrichtung (202) vor dem Neustart zu erhalten.

4. Elektronische Vorrichtung (200) nach einem der Ansprüche 1 bis 3, wobei die Befehle, wenn sie von dem mindestens einen Prozessor (306) ausgeführt werden, die elektronische Vorrichtung dazu veranlassen, auf der Grundlage der festgelegten Zeit, die nach dem Lösen der Verbindung zu der ersten externen elektronischen Vorrichtung (202) verstrichen ist, zu entscheiden, in einen verlorenen Modus einzutreten.

5. Elektronische Vorrichtung (200) nach einem der Ansprüche 2 bis 4, wobei die Befehle, wenn sie von dem mindestens einen Prozessor (306) ausgeführt werden, die elektronische Vorrichtung dazu veranlassen:
eine Datenschutz-ID der elektronischen Vorrichtung (200) auf der Grundlage der Schlüsselinformationen zu erzeugen,
den ersten Zeitstempel des festgelegten Werts zu erzeugen, der den Neustart angibt,
Signaturdaten für die Datenschutz-ID und den ersten Zeitstempel auf der Grundlage der Schlüsselinformationen zu erzeugen und
das Ankündigungspaket zu erzeugen, das die Datenschutz-ID, den ersten Zeitstempel und die Signaturdaten enthält.

6. Elektronische Vorrichtung (200) nach einem der Ansprüche 1 bis 5, wobei die Befehle, wenn sie von dem mindestens einen Prozessor (306) ausgeführt werden, die elektronische Vorrichtung dazu veranlassen, die Nachricht über eine Bluetooth-Low-Energy-, BLE, - Verbindung zwischen der elektronischen Vorrichtung (200) und der zweiten externen elektronischen Vorrichtung (204) zu empfangen.

7. Elektronische Vorrichtung (200) nach einem der Ansprüche 1 bis 6, wobei die Befehle, wenn sie von dem mindestens einen Prozessor (306) ausgeführt werden, die elektronische Vorrichtung dazu veranlassen, ein Ankündigungspaket zu senden, das einen dritten Zeitstempel enthält, der auf der Grundlage der eingestellten Tick-Zählung erzeugt wird.

8. Server (206), umfassend:
eine Kommunikationsschaltung (314);
mindestens einen Prozessor (316), der funktionsfähig mit der Kommunikationsschaltung (314) gekoppelt ist; und
einen Speicher (318), in dem Befehle gespeichert sind,
wobei die Befehle, wenn sie von dem mindestens einen Prozessor (316) ausgeführt werden, den Server dazu veranlassen:
einen Standortbericht über die Kommunikationsschaltung (314) von einer ersten externen elektronischen Vorrichtung (204) zu empfangen,
eine elektronische Vorrichtung (200), die eine verlorene Ankündigung durchführt, anhand des Standortberichts zu identifizieren,
festzustellen, ob der Standortbericht einen ersten Zeitstempel eines festgelegten Werts enthält, der angibt, dass die elektronische Vorrichtung nach dem Onboarding oder der Synchronisierung mit dem Server neu gestartet wurde, und
wenn der Standortbericht den ersten Zeitstempel des festgelegten Werts enthält, eine Nachricht, die einen zweiten Zeitstempel des Servers enthält, über die erste externe elektronische Vorrichtung (204) an die elektronische Vorrichtung (200) zu übertragen.

9. Server nach Anspruch 8, wobei die Befehle, wenn sie von dem mindestens einen Prozessor (316) ausgeführt werden, den Server dazu veranlassen, die Nachricht unter Verwendung von Schlüsselinformationen zu verschlüsseln, die mit der elektronischen Vorrichtung (200) geteilt werden.

10. Server nach Anspruch 9, wobei die Befehle, wenn sie von dem mindestens einen Prozessor (316) ausgeführt werden, den Server dazu veranlassen, während des Onboardings der elektronischen Vorrichtung (200) über eine Verbindung mit der zweiten externen elektronischen Vorrichtung (202) einen Referenzzeitstempel und die Schlüsselinformationen über eine zweite externe elektronische Vorrichtung (202) an die elektronische Vorrichtung (200) zu übertragen.

11. Verfahren zum Betreiben einer elektronischen Vorrichtung (200), umfassend:
Neustarten einer festgelegten Zeit, nachdem eine Verbindung zu einer ersten externen elektronischen Vorrichtung (202) gelöst wurde;
Erzeugen (725) eines Ankündigungspakets, das einen ersten Zeitstempel eines festgelegten Werts enthält, der den Neustart angibt;
Senden (730) des Ankündigungspakets;
Empfangen (735) einer Nachricht, die einen zweiten Zeitstempel eines Servers enthält, von einer zweiten externen elektronischen Vorrichtung (204) nach dem Senden des Ankündigungspakets; und
Einstellen (740) einer Tick-Zählung der elektronischen Vorrichtung (200) auf der Grundlage des zweiten Zeitstempels des Servers.

12. Verfahren nach Anspruch 11, umfassend ferner:
Erhalten des zweiten Zeitstempels durch Entschlüsseln der Nachricht unter Verwendung von Schlüsselinformationen, die mit dem Server geteilt werden, und
Erhalten (705) eines Referenzzeitstempels zur Synchronisation mit dem Server und der Schlüsselinformationen von der ersten externen elektronischen Vorrichtung (202) während des Onboardings über die Verbindung mit der ersten externen elektronischen Vorrichtung (202) vor dem Neustart.

13. Verfahren nach Anspruch 12, wobei das Erzeugen (725) des Ankündigungspakets Folgendes umfasst:
Erzeugen (1106, 1108, 1110) einer Datenschutz-ID der elektronischen Vorrichtung (200) auf der Grundlage der Schlüsselinformationen,
Erzeugen (1112, 1114) des ersten Zeitstempels des festgelegten Werts auf der Grundlage des Neustarts,
Erzeugen (1216, 1218) von Signaturdaten für die Datenschutz-ID und den ersten Zeitstempel auf der Grundlage der Schlüsselinformationen und
Erzeugen (1220) des Ankündigungspakets, das die Datenschutz-ID, den ersten Zeitstempel und die Signaturdaten enthält.

14. Verfahren zum Betreiben eines Servers (206), umfassend:
Empfangen (805) eines Standortberichts von einer ersten externen elektronischen Vorrichtung (204);
Identifizieren (810) einer elektronischen Vorrichtung (200), die eine verlorene Ankündigung durchführt, anhand des Standortberichts;
Feststellen (825), ob der Standortbericht einen ersten Zeitstempel eines festgelegten Werts enthält, der angibt, dass die elektronische Vorrichtung nach dem Onboarding oder der Synchronisierung mit dem Server neu gestartet wurde; und
Übertragen (830, 835, 840) einer Nachricht, die einen zweiten Zeitstempel des Servers enthält, über die erste externe elektronische Vorrichtung (204) an die elektronische Vorrichtung (200), wenn der Standortbericht den ersten Zeitstempel des festgelegten Werts enthält.

15. Verfahren nach Anspruch 14, wobei das Übertragen der Nachricht das Verschlüsseln (835) der Nachricht unter Verwendung von Schlüsselinformationen umfasst, die mit der elektronischen Vorrichtung (200) geteilt werden, und
wobei das Verfahren ferner das Übertragen (1004) eines Referenzzeitstempels und der Schlüsselinformationen über eine zweite externe elektronische Vorrichtung (202) an die elektronische Vorrichtung (200) während des Onboardings der elektronischen Vorrichtung (200) über eine Verbindung mit der zweiten externen elektronischen Vorrichtung (202) umfasst.

## Revendications

1. Dispositif électronique (200) consistant à :
une circuiterie de communication (304) ;
au moins un processeur (306) couplé opérationnellement à la circuiterie de communication (304) ; et
une mémoire (308) stockant des instructions,
dans lequel les instructions, lorsqu'elles sont exécutées par l'au moins un processeur (306), amènent le dispositif électronique à :
redémarrer un temps désigné après qu'une connexion à un premier dispositif électronique externe (202) est libérée,
générer un paquet d'annonce comportant un premier horodatage d'une valeur désignée indiquant le redémarrage,
diffuser le paquet d'annonce via la circuiterie de communication (304),
recevoir un message comportant un deuxième horodatage d'un serveur provenant d'un second dispositif électronique externe (204) via la circuiterie de communication (304), après la diffusion du paquet d'annonce, et
définir un compteur de ticks du dispositif électronique (200) sur la base du deuxième horodatage du serveur.

2. Dispositif électronique (200) selon la revendication 1, dans lequel les instructions, lorsqu'elles sont exécutées par l'au moins un processeur (306), amènent le dispositif électronique à obtenir le deuxième horodatage en déchiffrant le message au moyen d'informations de clé partagées avec le serveur.

3. Dispositif électronique (200) selon la revendication 2, dans lequel les instructions, lorsqu'elles sont exécutées par l'au moins un processeur (306), amènent le dispositif électronique à obtenir un horodatage de référence pour la synchronisation avec le serveur et les informations de clé à partir du premier dispositif électronique externe (202) pendant l'intégration initiale via la connexion au premier dispositif électronique externe (202) avant le redémarrage.

4. Dispositif électronique (200) selon l'une quelconque des revendications 1 à 3, dans lequel les instructions, lorsqu'elles sont exécutées par l'au moins un processeur (306), amènent le dispositif électronique à déterminer d'entrer dans un mode perdu sur la base de l'écoulement du temps désigné après que la connexion au premier dispositif électronique externe (202) est libérée.

5. Dispositif électronique (200) selon l'une quelconque des revendications 2 à 4, dans lequel les instructions, lorsqu'elles sont exécutées par l'au moins un processeur (306), amènent le dispositif électronique à :
générer un ID de confidentialité du dispositif électronique (200) sur la base des informations de clé,
générer le premier horodatage de la valeur désignée indiquant le redémarrage,
générer des données de signature pour l'ID de confidentialité et le premier horodatage sur la base des informations de clé, et
générer le paquet d'annonce comportant l'ID de confidentialité, le premier horodatage et les données de signature.

6. Dispositif électronique (200) selon l'une quelconque des revendications 1 à 5, dans lequel les instructions, lorsqu'elles sont exécutées par l'au moins un processeur (306), amènent le dispositif électronique à recevoir le message via une connexion Bluetooth Low Energy BLE entre le dispositif électronique (200) et le second dispositif électronique externe (204).

7. Dispositif électronique (200) selon l'une quelconque des revendications 1 à 6, dans lequel les instructions, lorsqu'elles sont exécutées par l'au moins un processeur (306), amènent le dispositif électronique à diffuser un paquet d'annonce compotrant un troisième horodatage généré sur la base du compteur de ticks défini.

8. Serveur (206) comprenant :
une circuiterie de communication (314) ;
au moins un processeur (316) couplé opérationnellement à la circuiterie de communication (314) ; et
une mémoire (318) stockant des instructions,
dans lequel les instructions, lorsqu'elles sont exécutées par l'au moins un processeur (316), amènent le serveur à :
recevoir un rapport de localisation provenant d'un premier dispositif électronique externe (204) via la circuiterie de communication (314),
identifier un dispositif électronique (200) effectuant une diffusion perdue à partir du rapport de localisation,
déterminer si le rapport de localisation comporte un premier horodatage d'une valeur désignée indiquant que le dispositif électronique a été redémarré après l'intégration initiale ou la synchronisation avec le serveur, et
lorsque le rapport de localisation comporte le premier horodatage de la valeur désignée, transmettre un message comportant un deuxième horodatage du serveur au dispositif électronique (200) via le premier dispositif électronique externe (204).

9. Serveur selon la revendication 8, dans lequel les instructions, lorsqu'elles sont exécutées par l'au moins un processeur (316), amènent le serveur à chiffrer le message au moyen d'informations de clé partagées avec le dispositif électronique (200).

10. Serveur selon la revendication 9, dans lequel les instructions, lorsqu'elles sont exécutées par l'au moins un processeur (316), amènent le serveur à transmettre un horodatage de référence et les informations de clé au dispositif électronique (200) via un second dispositif électronique externe (202) pendant l'intégration initiale du dispositif électronique (200) via une connexion au second dispositif électronique externe (202).

11. Procédé de fonctionnement d'un dispositif électronique (200), consistant à :
redémarrer un temps désigné après qu'une connexion à un premier dispositif électronique externe (202) est libérée ;
générer (725) un paquet d'annonce comportant un premier horodatage d'une valeur désignée indiquant le redémarrage ;
diffuser (730) le paquet d'annonce ;
recevoir (735) un message comportant un deuxième horodatage d'un serveur provenant d'un second dispositif électronique externe (204), après la diffusion du paquet d'annonce ; et
définir (740) un compteur de ticks du dispositif électronique (200) sur la base du deuxième horodatage du serveur.

12. Procédé selon la revendication 11, consistant en outre à :
obtenir le deuxième horodatage en déchiffrant le message au moyen d'informations de clé partagées avec le serveur, et
obtenir (705) un horodatage de référence pour la synchronisation avec le serveur et les informations de clé à partir du premier dispositif électronique externe (202) pendant l'intégration initiale via la connexion au premier dispositif électronique externe (202) avant le redémarrage.

13. Procédé selon la revendication 12, dans lequel la génération (725) du paquet d'annonce consiste à :
générer (1106, 1108, 1110) un ID de confidentialité du dispositif électronique (200) sur la base des informations de clé,
générer (1112, 1114) le premier horodatage de la valeur désignée sur la base du redémarrage,
générer (1216, 1218) des données de signature pour l'ID de confidentialité et le premier horodatage sur la base des informations de clé, et
générer (1220) le paquet d'annonce comportant l'ID de confidentialité, le premier horodatage et les données de signature.

14. Procédé de fonctionnement d'un serveur (206), consistant à :
recevoir (805) un rapport de localisation provenant d'un premier dispositif électronique externe (204) ;
identifier (810) un dispositif électronique (200) effectuant une diffusion perdue à partir du rapport de localisation ;
déterminer (825) si le rapport de localisation comporte un premier horodatage d'une valeur désignée indiquant que le dispositif électronique a été redémarré après l'intégration initiale ou la synchronisation avec le serveur ; et
lorsque le rapport de localisation comporte le premier horodatage de la valeur désignée, transmettre (830, 835, 840) un message comportant un deuxième horodatage du serveur au dispositif électronique (200) via le premier dispositif électronique externe (204).

15. Procédé selon la revendication 14, dans lequel la transmission du message comporte le chiffrement (835) du message au moyen d'informations de clé partagées avec le dispositif électronique (200), et
dans lequel le procédé comprend en outre la transmission (1004) d'un horodatage de référence et des informations de clé au dispositif électronique (200) via un second dispositif électronique externe (202) pendant l'intégration initiale du dispositif électronique (200) via une connexion au second dispositif électronique externe (202).
